# EUROPEAN PATENT APPLICATION

(11) **EP 4 604 262 A1**
(43) Date of publication of application: **20.08.2025**
(21) Application number: 24883562.1
(22) Date of filing: 01.11.2024
(51) Int. Cl.: H01M 10/42, H01M 50/383

(54) **THERMAL RUNAWAY TEST JIG FOR BATTERIES**

(30) Priority: 02.11.2023 KR 20230149611
(71) Applicant: LG Energy Solution, Ltd., Seoul 07335 (KR)
(72) Inventor: LEE, Tae Gyu, Daejeon 34122 (KR); KIM, Jihun, Daejeon 34122 (KR); OH, Myunggeun, Daejeon 34122 (KR)
(74) Representative: Plasseraud IP
(86) International application number: PCT/KR2024/017010
(87) International publication number: WO 2025/095658

(57) **Abstract**

A thermal propagation test jig for a battery includes a nail block, at least one nail located at a bottom of the nail block and a nail holderconfigured to receive the nail block and the at least one nail. The thermal propagation test jig for the battery is configured to evaluate a battery module's stability.

## Description

### [TECHNICAL FIELD]

The present disclosure relates to a thermal propagation test jig for a battery, and more specifically, to a cell bottom nail destroy test jig for a battery module.

### [BACKGROUND ART]

A secondary battery refers to a battery that can be charged and discharged, unlike a primary battery that cannot be charged, and is applied not only to portable devices but also to electric vehicles (EVs) and hybrid electric vehicles (HEVs) that are driven using an electric drive source.

Currently widely used types of secondary batteries include lithium ion batteries, lithium polymer batteries, nickel cadmium batteries, nickel hydrogen batteries, nickel zinc batteries, etc. The operating voltage of such a unit secondary battery cell, i.e., a unit battery cell, is approximately 2.5 V to 4.6 V. Therefore, when a higher output voltage is required, a battery pack is configured by connecting multiple battery cells in series. In addition, a battery pack is configured by connecting multiple battery cells in parallel depending on the charge/discharge capacity required for the battery pack. Therefore, the number of battery cells included in the battery pack can be set in various ways depending on the required output voltage or charge/discharge capacity.

When a battery pack is configured by connecting multiple battery cells in series/parallel, it is common to first configure a battery module composed of at least one battery cell, preferably multiple battery cells, and then use at least one battery module and add other components to configure the battery pack. Here, the battery module refers to a component in which multiple battery cells are connected in series or parallel, and the battery pack may refer to a component in which multiple battery modules are connected in series or parallel to increase capacity and output.

However, in such a battery module and pack, if there is overcharge or the like, an explosion or fire may occur due to swelling of the battery module, and such explosion or fire may cause a greater risk of causing casualties.

Therefore, stability evaluation of the battery module or pack is required.

### [DETAILED DESCRIPTION OF INVENTION]

### [TECHNICAL PROBLEMS]

An object of the present disclosure is to provide a thermal propagation test jig for a battery that can improve the accuracy in battery module stability evaluation.

### [TECHNICAL SOLUTION]

A thermal propagation test jig for a battery according to an embodiment of the present disclosure includes a nail block, at least one nail provided at the bottom of the nail block, and a nail holder configured to receive the nail block and the at least one nail.

Furthermore, the nail may be detachably coupled to the nail block.

Furthermore, the nail block may include a coupling hole to which the nail is coupled.

Furthermore, the at least one nail may include a plurality of nails.

Furthermore, the thermal propagation test jig may further include a push bar at a top of the nail block.

Furthermore, the thermal propagation test jig may further include an upper coupling hole to which the push bar is coupled.

Furthermore, the nail holder may include an insertion hole into which the nail block is inserted.

Furthermore, the nail block may be configured to be movable up and down within the insertion hole.

Furthermore, a bottom of the insertion hole may be spaced apart from a bottom of the nail holder.

Furthermore, the nail holder may further includes at least one passage hole through which the at least one nail passes at a bottom of the insertion hole.

Furthermore, the at least one passage hole may extend from the bottom of the insertion hole to a bottom of the nail holder.

Furthermore, the least one nail may be a plurality of nails and the at least one passage hole may be a plurality of passage holes through which the plurality of nails pass.

Furthermore, the nail holder may further include a pair of upper protrusions protruding upwardly at a top of the nail holder.

### [EFFECT OF INVENTION]

The thermal propagation test jig for a battery according to the present disclosure has the effect of improving accuracy and safety in battery module stability evaluation.

### [BRIEF DESCRIPTION OF THE DRAWING]

FIG. 1 is a diagram showing a thermal propagation test box used in the present disclosure.
FIG. 2 is a diagram showing the inside of the thermal propagation test box shown in FIG. 1.
FIG. 3 is a longitudinal cross-sectional view of the thermal propagation test box shown in FIG. 1.
FIG. 4 is a cross-sectional perspective view of a cylindrical battery cell.
FIG. 5 is a diagram showing a state in which a thermal propagation test jig according to the present disclosure is set in the thermal propagation test box.
FIG. 6 is a diagram showing a longitudinal cross-sectional view of a state in which the thermal propagation test jig according to the present disclosure is set in the thermal propagation test box.
FIG. 7 is a perspective view of the thermal propagation test jig for a battery according to the present disclosure.
FIG. 8 is a longitudinal cross-sectional view of the thermal propagation test jig for a battery shown in FIG. 7.
FIG. 9 is a partial detailed view of the thermal propagation test jig for a battery shown in FIG. 7.
FIG. 10 is a diagram showing the inside of the thermal propagation test jig for a battery shown in FIG. 7.
FIG. 11 is a diagram showing a state of use of the thermal propagation test jig for a battery according to the present disclosure in the thermal propagation test box.

### [BEST MODE FOR CARRYING OUT THE INVENTION]

The advantages and features of the present disclosure, and the methods for achieving the same will become clear with reference to the embodiments described below in conjunction with the accompanying drawings. However, the present disclosure is not limited to the embodiments disclosed below, but may rather be implemented in various different forms, and these embodiments are provided only to make the present disclosure complete and to fully inform those skilled in the art of the scope of the disclosure, and the present disclosure is defined only by the scope of the claims. Accordingly, in some embodiments, well-known process steps, well-known device structures, and well-known techniques are not specifically described in order to avoid ambiguity in the interpretation of the present disclosure. Like reference numerals refer to like elements throughout the specification.

In the drawings, the thickness may be enlarged to clearly express various layers and regions. Like reference numerals are used for similar parts throughout the specification. When a part, such as a layer, a film, a region, or a plate, is said to be "on" another part, this includes not only cases where it is "directly on" the other part, but also cases where there is another part in between. Conversely, when a part is said to be "directly on" another part, it means that there is no other part in between. Further, when a part, such as a layer, a film, a region, or a plate, is said to be "beneath" another part, this includes not only cases where it is "directly beneath" the other part, but also cases where there are other parts in between. Conversely, when a part is said to be "directly beneath" another part, it means that there are no other parts in between.

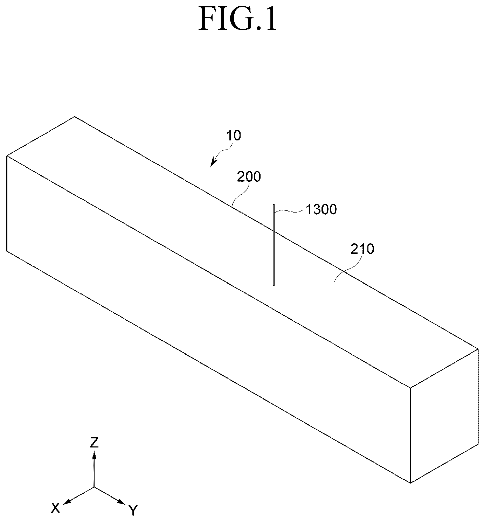

Prior to describing a thermal propagation test jig 1000 for a battery according to the present disclosure, a multi-cell stacked thermal propagation test box 10 for a thermal propagation test will be described with reference to FIGS. 1 to 5.

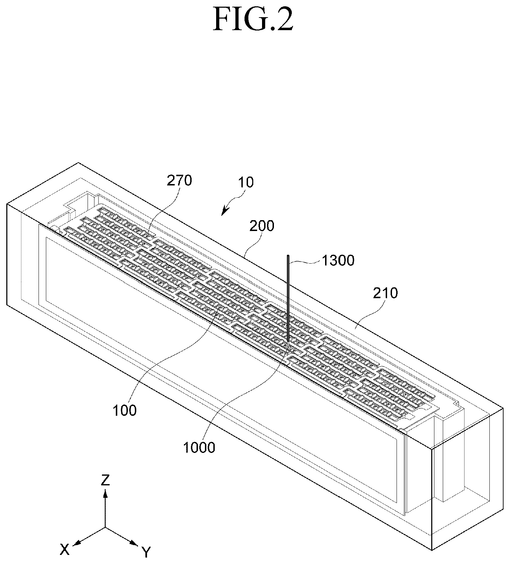

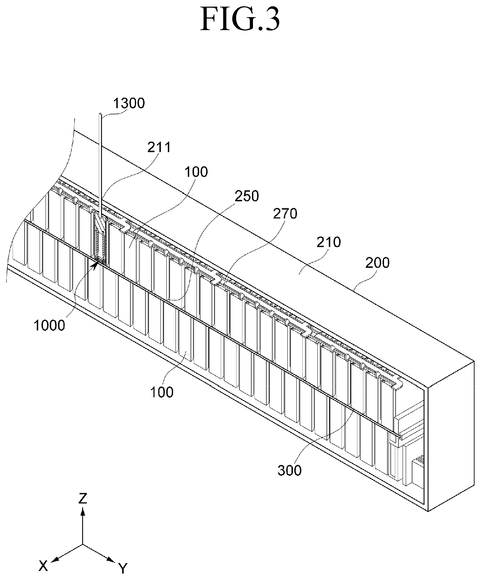

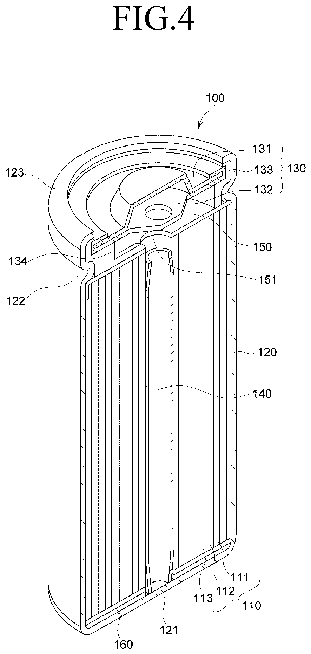

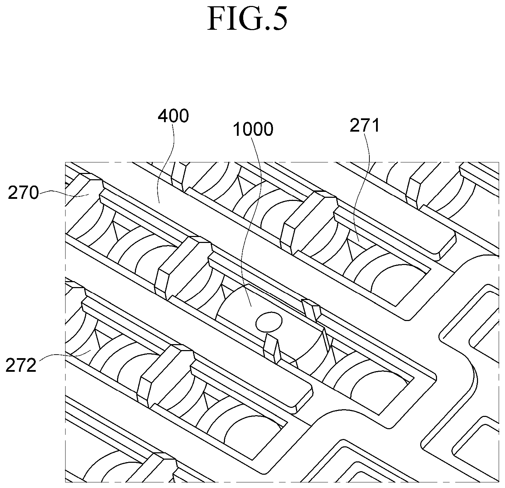

FIG. 1 is a diagram showing a thermal propagation test box used in the present disclosure, FIG. 2 is a diagram showing the inside of the thermal propagation test box shown in FIG. 1, FIG. 3 is a longitudinal cross-sectional view of the thermal propagation test box shown in FIG. 1, FIG. 4 is a cross-sectional perspective view of a cylindrical battery cell, and FIG. 5 is a diagram showing a state in which a thermal propagation test jig according to the present disclosure is set in the thermal propagation test box.

The stability evaluation (thermal propagation-chain ignition) of a multi-cell module can be verified after destruction by applying an external impact/energy to some cells. The stability of a multi-cell module is typically evaluated by a nail test, an overcharge test, and a heater test.

Among these, the nail test can be performed at the bottom part (venting direction) of a cell due to the structure of a module.

The thermal propagation test jig 1000 for a battery according to the present disclosure may be used for a nail test.

The thermal propagation test box 10 may include a plurality of battery cells 100, a case 200, and a middle frame 300.

The battery cell 100 may be a cylindrical battery cell 100 in which an electrode assembly is built into a metal can. FIG. 4 is a cross-sectional perspective view of the cylindrical battery cell 100.

The cylindrical battery cell 100 may include a jelly-roll-shaped electrode assembly 110 and a battery case 120 for accommodating the electrode assembly 110, an upper insulating member 150 may be placed on the upper end of the electrode assembly 110, and a lower insulating member 160 may be placed on the lower end of the electrode assembly 110.

The electrode assembly 110 has a jelly-roll-shaped structure in which an anode 111, a cathode 113, and a separator 112 interposed therebetween are wound, and a center pin 140 may be inserted into the center thereof.

The cylindrical battery cell 100 may be formed by accommodating the electrode assembly 110 in the battery case 120, injecting an electrolyte into the battery case 120, and then combining a cap assembly 130 with the upper end of the battery case 120. The battery case 120 is cylindrical, and the j elly-roll-shaped electrode assembly 110 may be accommodated in the cylindrical battery case 120 to implement a cylindrical secondary battery.

The battery case 120 may include a bottom part 121 arranged on the bottom, a beading part 122, and a clamping part 123.

The beading part 122 is for stable coupling of the cap assembly 130, and may be formed in the circumferential direction on the upper portion of the outer surface of the battery case 120 by being recessed in the center direction of the electrode assembly 110 on the outer surface of the battery case 120. The beading part 122 can prevent movement of the electrode assembly 110.

The clamping part 123 may be disposed on the upper portion of the beading part 122 and formed to cover the edge of the cap assembly 130 in the circumferential direction. The clamping part 123 can ensure stable coupling of the cap assembly 130.

The cap assembly 130 may include a top cap 131 forming an anode terminal, a cap plate 132 to which an anode tab 134 extending upward from the electrode assembly 110 is connected, and a gasket 133 for maintaining sealing.

The gasket 133 may be mounted on the upper inner surface of the clamping part 123 and the beading part 122 to increase the sealing force between the cap assembly 130 and the battery case 120.

As described above, the anode tab 134 may extend upward from the electrode assembly 110. Specifically, the anode tab 134 may extend from the anode 111 of the electrode assembly 110.

The anode tab 134 is connected to the cap plate 132, and thus the top cap 131 can serve as an anode terminal. An opening 151 is formed in the upper insulating member 150, and the anode tab 134 may penetrate the opening 151 and be connected to the cap plate 132.

The center pin 140 generally includes a metal material to provide a predetermined strength and is formed in a cylindrical structure in which a plate is bent roundly. In addition to self-heating, the center pin 140 can function as a passage for fixing and supporting the electrode assembly 110 and releasing gas generated by internal reactions during charging/discharging and operation.

The electrolyte injected into the battery case 120 may be a lithium salt-containing non-aqueous electrolyte, and the lithium salt-containing non-aqueous electrolyte is composed of a non-aqueous electrolyte and a lithium salt. Non-aqueous organic solvents, organic solid electrolytes, inorganic solid electrolytes, and the like may be used as non-aqueous electrolytes, but the present disclosure is not limited thereto.

The battery cell 100 applied to the thermal propagation test box 10 is not necessarily limited to the cylindrical battery cell 100, and for example, the thermal propagation test box 10 according to the present disclosure may be configured by using a can-shaped battery cell having a battery case in a rectangular parallelepiped shape or other shapes instead of a cylindrical shape.

The case 200 of the thermal propagation test box 10 may accommodate a plurality of battery cells 100, and in the present embodiment, the case 200 may be formed in a rectangular parallelepiped shape as illustrated. An insertion hole 211 may be formed in an upper plate 210 of the case 200.

In the present embodiment, the case 200 may have a structure in which a plurality of battery cells 100 is stacked vertically.

In a structure in which the battery cell 100 is disposed at the top inside the case 200, the battery cell 100 may be disposed between a cell bottom frame 250 and a cell top frame 270.

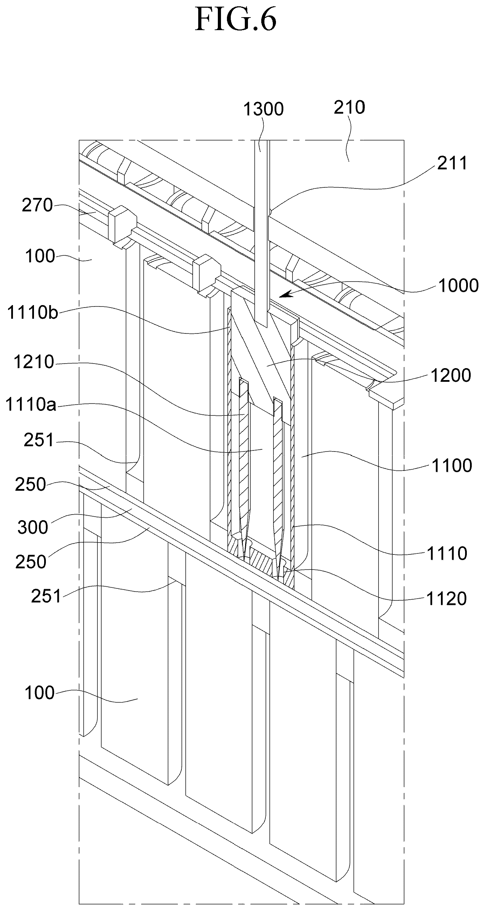

The cell bottom frame 250 may have an approximately square shape and include a plurality of cell insertion holes 251, and the battery cell 100 may be inserted into each of the cell insertion holes 251. The cell insertion holes 251 are formed in a circular shape, and thus the circular battery cell 100 can be inserted thereinto. For example, as shown in FIGS. 5 and 6, the battery cell 100 can be inserted into each cell insertion hole 251 such that the top cap 131 faces upward and the bottom part 121 of the battery case 120 faces downward.

When the battery cells 100 are inserted into the cell bottom frame 250, the battery cells 100 may be arranged to form multiple rows in the X-axis or Y-axis direction of the case 200.

The cell top frame 270 may be disposed on the battery cells 100 to cover the upper regions of the battery cells and may be coupled with the cell bottom frame 250.

For example, the cell top frame 270 may include cell sockets 271 that are aligned vertically with the cell insertion holes 251 of the cell bottom frame 250, and when the cell top frame 270 and the cell bottom frame 250 are coupled, the top caps 131 of the battery cells 100 may be inserted into the cell sockets 271 and thus the upper regions of the battery cells 100 can be covered by the cell top frame 270.

In addition, a plurality of holes 272 is disposed on the upper surface of the cell top frame 270 as shown in FIG. 5.

The holes 272 formed on the upper surface of the cell top frame 270 may be formed by partially perforating the cell top frame 270 such that the top caps 131 of the battery cells 100 or the upper portion of the battery case 120 can be partially exposed to the outside.

These holes 272 may be used as passages through which the battery cells 100 can be connected to busbars 400 disposed on the upper surface of the cell top frame 270 using metal wires.

The busbar 400 may be connected to the top cap 131 of the battery cell 100 or the upper end of the battery case 120 exposed through the holes 272 using a metal wire. For example, a wire bonding method through which one end of the metal wire is welded to the top cap 131 or the upper end of the battery case 120 and the other end of the metal wire is welded to the busbar 400 may be adopted.

In the present embodiment, a structure in which the battery cell 100 is disposed at the bottom inside the case 200 may be implemented by turning a structure in which the battery cell is disposed at the top upside down or as a vertically symmetrical structure.

Although the battery cell 100 may be disposed between the cell bottom frame 250 and the cell top frame 270 in the structure in which the battery cell 100 is disposed at the bottom inside the case 200, similarly to the structure in which the battery cell 100 is disposed at the top described above, the direction in which the battery cell 100 is disposed may be opposite to that in the structure in which the battery cell 100 is disposed at the top described above.

That is, the battery cell 100 may be disposed at the bottom inside the case 200 such that the top cap 131 faces downward and the bottom part 121 of the battery case 120 faces upward. Accordingly, the cell bottom frame 250 may be disposed at the top of the bottom part 121 of the battery case 120 at the bottom inside the case 200, and the cell top frame 270 may be disposed at the bottom of the top cap 131 of the battery cell 100. In addition, the battery cell 100 disposed at the bottom may be misaligned with the upper battery cell 100, and as shown in FIG. 6, one upper battery cell 100 may be disposed over two battery cells 100 arranged at the bottom.

In the structure in which the battery cell 100 is disposed at the bottom inside the case 200, the cell bottom frame 250 may include a plurality of cell insertion holes 251 as in the upper battery cell arrangement structure, and cell top frame 270 may include cell sockets 271, and the holes 272 and the busbars 400 may also be arranged in the same manner.

The middle frame 300 may be placed between the upper and lower battery cells 100 in the case 200, and cell bottom frames 250 in which the upper and lower battery cells 100 are disposed may be placed on and under the middle frame 300 to face each other.

The battery thermal propagation test jig 1000 according to the present disclosure applied to the thermal propagation test box 10 having such the aforementioned configuration will be described.

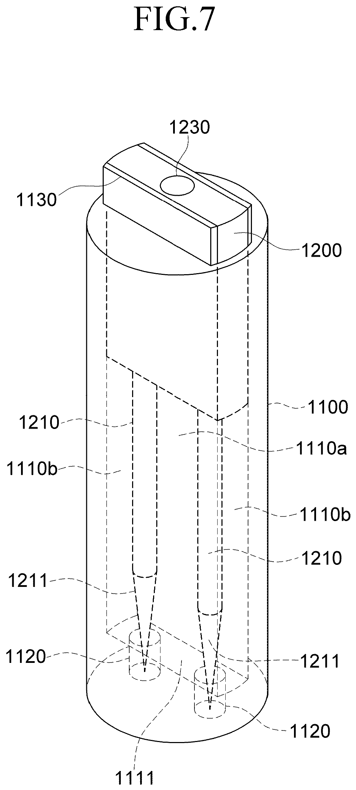

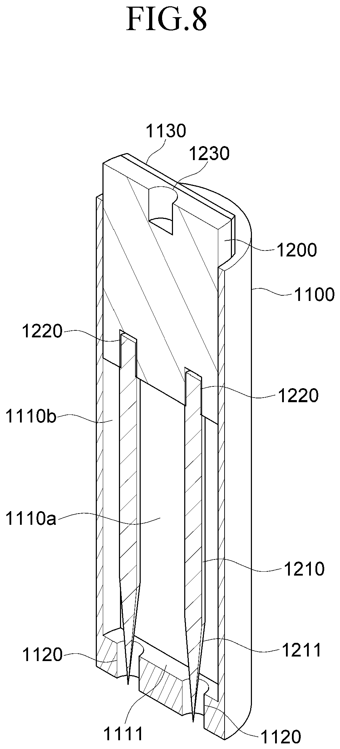

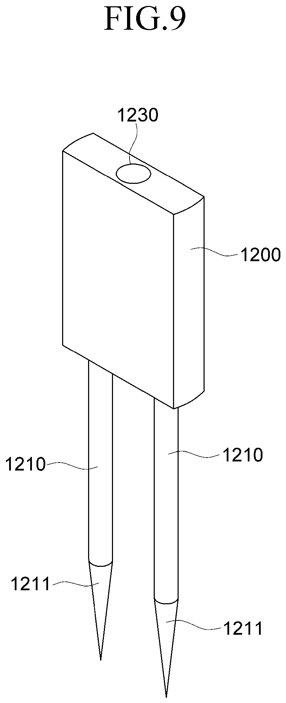

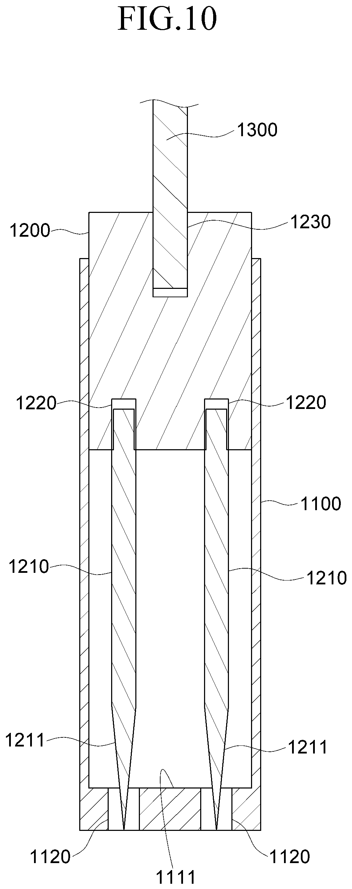

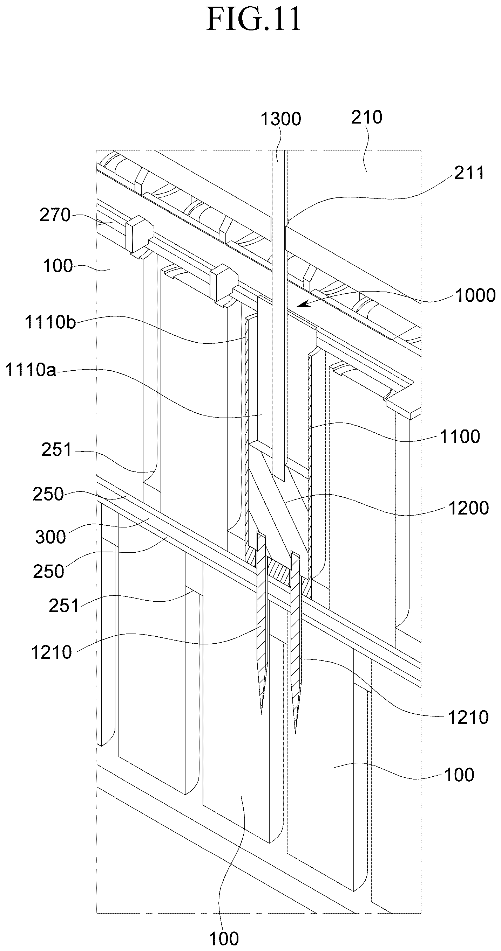

FIG. 6 is a diagram showing a longitudinal cross-sectional view of a state in which the thermal propagation test jig according to the present disclosure is set in the thermal propagation test box, FIG. 7 is a perspective view of the thermal propagation test jig for a battery according to the present disclosure, FIG. 8 is a longitudinal cross-sectional view of the thermal propagation test jig for a battery shown in FIG. 7, FIG. 9 is a partial detailed view of the thermal propagation test jig for a battery shown in FIG. 7, FIG. 10 is a diagram showing the inside of the thermal propagation test jig for a battery shown in FIG. 7, and FIG. 11 is a diagram showing a state of use of the thermal propagation test jig for a battery according to the present disclosure in the thermal propagation test box.

The thermal propagation test jig 1000 for a battery according to an embodiment of the present disclosure may include a nail assembly 1200 (nail block) to which a nail 1210 is coupled, and a nail holder 1100 supporting the nail assembly 1200.

One or more nails 1210 may be coupled to the lower portion of the nail assembly 1200, and for this purpose, coupling holes 1220 to which the nails 1210 are coupled may be formed at the bottom of the nail assembly 1200.

In addition, a plurality of nails 1210 may be coupled to the nail assembly 1200, and a plurality of coupling holes 1220 to which the plurality of nails 1210 is coupled may be formed at the bottom of the nail assembly 1200.

FIGS. 6 to 11 illustrate an example in which two coupling holes 1220 are formed at the bottom of the nail assembly 1200 and nails 1210 are coupled to the two coupling holes 1220.

An upper coupling hole 1230 may be formed at the top of the nail assembly 1200, and a push bar 1300 may be coupled to the upper coupling hole 1230.

The push bar 1300 may be detachably coupled to the top of the nail assembly 1200, and thus the push bar 1300 may be replaceable.

The push bar 1300 may be pressed from the outside of the thermal propagation test box 10 to move the nail assembly 1200 downward.

As illustrated, the push bar 1300 may be positioned to extend outward through the insertion hole 211 of the upper plate 210 in a state in which the thermal propagation test jig 1000 of the present disclosure is set in the thermal propagation test box 10. As a result, the battery cell 100 can be destroyed by pressing the push bar 1300 from the outside of the thermal propagation test box 10.

The nail 1210 is used to destroy the battery cell 100 and may be positioned vertically at the bottom of the nail assembly 1200, the body of the nail 1210 may extend vertically in a cylindrical shape, and the lower end of the nail 1210 may be formed in a cone shape.

The nail 1210 is detachably coupled to the coupling hole 1220 formed at the bottom of the nail assembly 1200, thereby enabling replacement of the nail 1210, and the lower end of the nail 1210 is formed in a cone shape, thereby making it easy to destroy the bottom of the battery cell 100.

The nail 1210 and the nail assembly 1200 may be accommodated in the nail holder 1100 as illustrated.

The nail holder 1100 is used to accommodate and support the nail 1210 and the nail assembly 1200, and the body of the nail holder 1100 is formed in an approximately cylindrical shape in the present embodiment.

Specifically, the nail holder 1100 includes an insertion hole 1110 into which the nail assembly 1200 is inserted.

The insertion hole 1110 is formed by extending downward from the top of the nail holder 1100 by a certain length, and the nail assembly 1200 to which the nail 1210 is coupled may move up and down within the insertion hole 1110 after being inserted into the insertion hole 1110. Therefore, the vertical length of the insertion hole 1110 may be greater than that of the nail assembly 1200.

The insertion hole 1110 may be formed to correspond to the nail assembly 1200. Accordingly, the inner surface of the insertion hole 1110 may include a pair of first inner wall surfaces 1110a and a pair of second inner wall surfaces 1110b facing each other to correspond to the nail assembly 1200. The second inner wall surfaces 1110b may connect the pair of first inner wall surfaces 1110a to each other. In the present embodiment, the first inner wall surfaces 1110a may be formed as a plane, and the second inner wall surfaces 1110b may be formed to have a rounded cross-section in the shape of an arc.

The bottom 1111 of the insertion hole 1110 may be positioned at a certain distance upward from the bottom of the nail holder 1100, and a passage hole 1120 may be formed at the bottom of the insertion hole 1110.

The passage hole 1120 extends from the bottom 1111 of the insertion hole 1110 to the bottom of the nail holder 1100, and the bottom 1111 of the insertion hole 1110 is connected to the outside by the passage hole 1120.

In addition, the nail 1210 can move downward from the nail holder 1100 through the passage hole 1120 to destroy the battery cell 100.

A pair of upper protrusions 1130 protruding upward may be formed on the nail holder 1100. The upper protrusions 1130 may be formed to extend upward from the pair of first inner wall surfaces 1110a and may be disposed on both sides of the nail assembly 1200. The upper protrusions 1130 may guide insertion and vertical movement of the nail assembly 1200.

In addition, when setting the thermal propagation test jig 1000 according to the present disclosure in the test box 10, a tester can easily insert the same into the cell insertion hole 251 of the test box 10 by holding the upper protrusions 1130.

Next, a process of setting the thermal propagation test jig 1000 for a battery according to the present disclosure in the test box 10 and performing a thermal propagation (TP) test will be described with reference to FIGS. 6 and 11.

As shown in FIG. 6, the thermal propagation test jig 1000 is set instead of the battery cell 100 in one cell insertion hole 251 in the thermal propagation test box 10, and the push bar 1300 is pressed downward while being coupled to the nail assembly 1200 through the insertion hole 211 formed in the upper plate 210 of the case 200 in the thermal propagation test box 10.

When the push bar 1300 is pressed downward, the nail assembly 1200 moves downward along the insertion hole 1110, and the downward movement of the nail assembly 1200 causes the nail 1210 to move downward through the passage hole 1120. The nail assembly 1200 can move downward until it touches the bottom 1111 of the insertion hole 1110.

As shown in FIG. 11, the battery cell 100 positioned on the lower side is disposed opposite to the battery cell 100 positioned on the upper side, and the battery cell 100 positioned on the lower side may be positioned such that the top cap 131 faces downward and the bottom part 121 of the battery case 120 faces upward.

Therefore, the bottom of the battery cell 100 can be destroyed by the nail 1210 moving downward.

Specifically, the nail 1210 can move downward by penetrating the upper cell bottom frame 250, the middle frame 300, and the lower cell bottom frame 250, and the tip 1211 of the nail 1210 can penetrate the bottom of the battery cell 100 positioned thereunder and enter the inside of the battery cell 100.

As illustrated, in the present embodiment, two nails 1210 disposed at the bottom of the nail assembly 1200 can penetrate the bottoms of two adjacent battery cells 100.

The thermal propagation test jig 1000 in the present disclosure is configured as described above, thereby improving the accuracy and safety of a thermal propagation test.

Specifically, in the present disclosure, the battery cell 100 to be destroyed and the nail 1210 can be accurately aligned, and the battery cell 100 can be destroyed at an accurate location.

In addition, in the present disclosure, test failure due to bending of the nail 1210 does not occur, and the thermal propagation (TP) test can be performed for multiple cells as well as a single cell.

The present disclosure has been described with reference to preferred embodiments as described above, but is not limited to the above embodiments, and various changes and modifications may be made by those skilled in the art within the scope that does not depart from the spirit of the present disclosure.

### [INDUSTRIAL APPLICABILITY]

The present disclosure can provide a thermal propagation test jig for a battery that can improve accuracy and safety in battery module stability evaluation.

## Claims

1. A thermal propagation test jig for a battery, comprising:
a nail block;
at least one nail located at a bottom of the nail block; and
a nail holder configured to receive the nail block and the at least one nail.

2. The thermal propagation test jig of claim 1, wherein the at least one nail is detachably coupled to the nail block.

3. The thermal propagation test jig of claim 1, wherein the nail block includes a coupling hole to which the nail is coupled.

4. The thermal propagation test jig of claim 1, wherein the at least one nail is a plurality of nails.

5. The thermal propagation test jig of claim 1, further comprising a push bar at a top of the nail block.

6. The thermal propagation test jig of claim 5, wherein the nail block includes an upper coupling hole to which the push bar is coupled.

7. The thermal propagation test jig of claim 1, wherein the nail holder includes an insertion hole into which the nail block is inserted.

8. The thermal propagation test jig of claim 7, wherein the nail block is configured to be movable up and down within the insertion hole.

9. The thermal propagation test jig of claim 7, wherein a bottom of the insertion hole is spaced apart from a bottom of the nail holder.

10. The thermal propagation test jig of claim 7, wherein the nail holder further includes at least one passage hole through which the at least one nail passes at a bottom of the insertion hole.

11. The thermal propagation test jig of claim 10, wherein the at least one passage hole extends from the bottom of the insertion hole to a bottom of the nail holder.

12. The thermal propagation test jig of claim 10, wherein the at least one nail is a plurality of nails, and
wherein the at least one passage hole includes a plurality of passage holes through which the plurality of nails pass.

13. The thermal propagation test jig of claim 7, wherein the nail holder further includes a pair of upper protrusions protruding upwardly at a top of the nail holder.
